# EUROPÄISCHE PATENTSCHRIFT

(11) **EP 0 441 924 B1**
(45) Veröffentlichungstag und Bekanntmachung des Hinweises auf die Patenterteilung: **01.06.1994**
(21) Anmeldenummer: 90912175.8
(22) Anmeldetag: 28.08.1990
(51) Int. Cl.: C04B 28/02

(54) **HAFTVERMITTLER UND MOERTEL-ZUSATZ STABILISIERTER VISKOSITÄT SOWIE VERFAHREN ZU DESSEN HERSTELLUNG**
STABILISED-VISCOSITY ADHESIVE AGENT AND MORTAR ADDITIVE AND PROCESS FOR MAKING IT
AGENT ADHESIF ET ADDITIF DE MORTIER DE VISCOSITE STABILISEE AINSI QUE PROCEDE POUR SA FABRICATION

(30) Priorität: 07.09.1989 CH 3250/89; 09.08.1990 CH 2593/90
(43) Veröffentlichungstag der Anmeldung: 21.08.1991
(73) Patentinhaber: Holderchem Holding AG, CH-1700 Fribourg (CH)
(72) Erfinder: STUTZ, Beat, CH-3400 Burgdorf (CH); SUTER, Willi, CH-3400 Burgdorf (CH)
(74) Vertreter: Maspoli, René A.
(86) Internationale Anmeldenummer: CH9000201
(87) Internationale Veröffentlichungsnummer: WO9103437

(56) Entgegenhaltungen:
- EP-A- 0 222 932
- GB-A- 2 131 409

## Beschreibung

Die vorliegend beschriebene Erfindung betrifft einen Haftvermittler und Mörtel-Zusatz stabilisierter Viskosität und erhöhter Lagerfähigkeit, welcher ≧ 92,0 M.-% der Gesamtzusammensetzung an Wasser, an amorphem, feinverteiltem Siliziumdioxid und an mindestens einer synthetischen Polymerdispersion - mit Siliziumdioxid und Polymerdispersion zusammen bis auf ± 6,0 M.-% gleich der vorgelegten Wassermasse -, sowie ≦ 4,0 M.-% der Gesamtzusammensetzung an nichtionischem Netzmittel, an Stabilisatoren und an Dispergierhilfsmitteln enthält, sowie dessen Herstellung mit den Verfahrensschritten: Eintragen und -dispergieren des amorphen, feinverteilten Siliziumdioxides in die Formaldehyd-Naphthalinsulfonsäurekondensat-Wasser-Mischung vor oder nach Zugabe des Stabilitationszusatzes und dann Einmischen der synthetischen Polymerdispersion und abschliessend der Zusätze unter Einstellung auf eine beständige End-Viskosität von 200 bis 900 mPa·s, wodurch auch die Lagerstabilität verbessert wird. Der erfindungsgemässe Haftvermittler und Mörtel-Zusatz wird im folgenden auch als Mittel bezeichnet; erreicht werden mit ihm gute Haftvermittlungen und Betonelemente verbesserter Festigkeitswerte und erhöhter Dichtigkeit.

Gattungsgemässe Mittel sind auch aus der Patentliteratur bekannt:
Das Patent CH 658 854 lehrt Zusätze, die primär Mikrokieselsäure und ein wasserverminderndes Mittel enthalten. Dadurch sollen die Verarbeitbarkeit und die Plastizität der Mörtel-Zusatzmischung verbessert und die Festigkeit des erhaltenen Betons erhöht werden. Ein beispielhafter Zusatz gemäss diesem CH Patent enthält 47 Gew.-% Mikrokieselsäure und ca. 6 Gew.-% wasservermindernde Mittel mit Rest Wasser (Seiten 7 unten, 8 oben).

Die EP-A 0 222 932 (= D1) lehrt gattungsgemässe Mischungen. Keine dieser Mischungen enthält den anorganischen Stabilisator und/oder das organische, nichtionische Netzmittel gemäss dem erfindungsgemässen Haftvermittler und Mörtel-Zusatz.

Eine lagerstabile Ausführungsform dieser Mischungen ist im Beispiel 5 beschrieben; sie enthält keine Polymerdispersion oder -emulsion. Bei den Zusammensetzungen gemäss allen andern Beispielen mit Polymerdispersionen in D1 wird die Lagerstabilität nicht erwähnt.

Demgegenüber ist es die erfindungsgemässe Zusammensetzung K (siehe weiter unten) mit 25 Gew.-% Acryl-Dispersion, welche die hervorragende Stabilität gemäss der ebenfalls folgenden Tabelle 1 zeigt.

Schliesslich lehrt auch das Patent US 4 088 804 Zusätze zu Mörtel, die unter anderem amorphes Siliziumdioxid und Kunststoffdispersionen enthalten. Diese Zusätze sollen vor allem - zusammen mit Zement und Zuschlägen - schützende und dekorative Beschichtungen ergeben. Neben Zement und Zuschlägen liegen dabei die hier relevanten Hauptkomponenten gemäss der Tabelle I wie folgt vor: Wasser 32 bis 80 Gewichtsteile, Kunstharzdispersion 10 bis 15 Gewichtsteile, amorphes SiO₂ (Fly Ash oder Silica 200 Mesh) 10 bis 15 Gewichtsteile.

Aus dem Stand der Technik ist also bekannt, dass amorphes, feinverteiltes Siliziumdioxid in hydraulischen Bau- und Konstruktionsmaterialien vor allem durch seine latent hydraulische Reaktion mit freiem Kalziumhydroxid in den genannten Materialien deren Festigkeit und Dichtigkeit erhöhen kann.

Ebenso ist bekannt, dass Kunststoffdispersionen die Eigenschaften von hydraulischen Bau- und Konstruktionsmaterialien in Bezug auf deren Haftfestigkeit, Druck- und Biegezugfestigkeit, E-Modul und Dichtigkeit positiv beeinflussen können.

Demgegenüber löst die erfindungsgemässe Lehre die Aufgabe, sowohl hohe Anteile von amorphem, feinverteiltem Siliziumdioxid wie auch von synthetischen Polymerdispersionen unter Einhaltung einer stabilen Viskosität in gebrauchsgünstiger Grösse in den Mitteln zu verwenden.

Das erfindungsgemässe Verfahren zur Herstellung des Mittels dient ebenfalls der Lösung der genannten Aufgabe.

Die Aufgabe wird durch den Haftvermittler und Mörtel-Zusatz gemäss den Ansprüchen gelöst, d.h. letztlich sowohl durch eine Kombination von spezifischen Komponenten in speziellen Gehalten als auch durch das Herstellungsverfahren ebenfalls gemäss dem Patentanspruch. Die Anmelderin führt die nicht ohne weiteres voraussehbare Tatsache der Viskositätsregulierung und der Doppelverwendung der erfindungsgemässen Zusammensetzungen auf eben diese Spezifikationen zurück.

Der erfindungsgemässe Haftvermittler und Mörtel-Zusatz stabilisierter Viskosität und erhöhter Lagerfähigkeit, welcher ≧ 92,0 M.-% der Gesamtzusammensetzung an Wasser, an amorphem, feinverteiltem Siliziumdioxid und an mindestens einer synthetischen Polymerdispersion - mit Siliziumdioxid und Polymerdispersion zusammen bis auf ± 6,0 M.-% gleich der vorgelegten Wassermasse -, sowie ≦ 4,0 M.-% der Gesamtzusammensetzung an nichtionischem Netzmittel, an Stabilisatoren und an Dispergierhilfsmittel enthält, ist dadurch gekennzeichnet, dass
- als amorphes, feinverteiltes Siliziumdioxid solches mit ≧ 92,0 M.-% SiO₂, dass
- als Stabilisationszusatz entweder ein schon mit kaltem Wasser quellbarer und auf Magnesiumsilikat beruhender Bentonit, eine mit Aluminiumoxid im Verhältnis von 4 : 1 bis 8 : 1 vermengte, feinstverteilte Kieselsäure hoher spezifischer Oberfläche oder ein Aluminiumoxid hoher spezifischer Oberfläche mit ≧ 96,0 M.-% Al₂O₃-Gehalt in Anteilen von 0,2 bis 4,0 M.-% - bezogen auf die Gesamtzusammensetzung - dass
- als Dispergierzusatz ein solcher auf der Basis von in Wasser gelösten Formaldehyd-Naphthalinsulfonsäurenkondensaten in Anteilen von 0,05 bis 2,0 M.-% (Feststoff) - bezogen auf die Gesamtzusammensetzung - und dass
- als nichtionisches Netzmittel ein solches mit hydrophilem wie hydrophobem Charakter, speziell ein äthoxyliertes pflanzliches Oel, in Anteilen von 0,4 bis 2,0 M.-% - bezogen auf die Gesamtzusammensetzung -
im Haftvermittler und Mörtel-Zusatz vorliegen.

Vorteilhafterweise enthält das Mittel das amorphe, feinverteilte Siliziumdioxid als ein solches mit ≧ 95,0 M.-% SiO₂ und ≦ 1,2 M.-% C (Kohlenstoff), die mit Aluminiumoxid vermengte Kieselsäure hoher spezifischer Oberfläche als eine solche mit 80,0 bis 90,0 M.-% SiO₂ und 10,0 bis 20,0 M.-% Al₂O₃ und mit einer durchschnittlichen spezifischen Oberfläche nach BET von > 100 m²/g und das Aluminiumoxid hoher spezifischer Oberfläche ein solches mit > 98,0 M.-% Al₂O₃ und mit > 80,0 m²/g nach BET.

Die bevorzugten Formaldehyd-Naphthalinsulfonsäurekondensate sind bis über 100^{o}C temperaturbeständig, in mit Kalk gesättigtem Wasser gut löslich und praktisch chloridfrei.

Das erfindungsgemässe Verfahren zur Herstellung des genannten Haftvermittlers und Mörtel-Zusatzes ist gekennzeichnet durch den Ablauf der folgenden Verfahrensschritte:
- Eintragen und -dispergieren des amorphen, feinverteilten Siliziumdioxides in die Formaidehyd-Naphthalinsulfonsäurekondensat-Wasser-Mischung vor oder nach Zugabe des Stabilisationszusatzes, dann
- Einmischen der organischen Polymerdispersion und abschliessend der Zusätze,
unter Einstellung auf eine beständige End-Viskosität von 200 bis 900 mPa·s, wodurch auch die Lagerstabilität verbessert wird.

Verwendung findet der so hergestellte Haftvermittler und Mörtel-Zusatz zur Herstellung von Haftbrücken und von Beton mit verbesserten Haft- und Festigkeitseigenschaften.

Bevorzugte, beispielhafte erfindungsgemässe Mittel weisen die folgenden Komponenten innerhalb der angegebenen Anteile auf:

| Massenteile | Komponente |
|---|---|
| 0,2 - 1,2 | Dispergierzusatz (40 %-ige Lösung eines Formaldehyd-Naphthalinsulfonsäurekondensates) |
| 1,0 - 2,2 | Stabilisationszusatz |
| 25 ± 2 | amorphes, feinverteiltes Siliziumdioxid |
| 25 ± 2 | wässerige Kunststoff-Dispersion |
| 0,4 - 2,0 | Nichtionogenes Netzmittel mit hydrophilem und hydrophobem Charakter |
| 0,1 - 0,25 | Dispergierhilfsmittel (mischbar in Wasser und in Kohlenwasserstoff) |
| 0,04 - 0,1 | Entschäumer |
| 0,5 | Filmbilde- und Verlaufsmittel |
| 0,05 | Fungicid |
| Rest | Wasser |

Bei den bevorzugten Herstellungsverfahren werden die gelösten Formaldehyd-Naphthalinsulfonsäurekondensate zum ansatzgemäss benötigten Wasser gegeben und in diese Mischung langsam und unter ständigem Rühren das amorphe, feinverteilte Siliziumdioxid gegeben, das letztere entweder vor oder nach der Zugabe des Stabilisationszusatzes.

Nun erfolgt die Zugabe der synthetischen Polymeremulsion bzw. -dispersion, wobei die Mischung stark eindickt.

Schliesslich werden die weiteren Zusätze, d.h. das nichtionogene Netzmittel und das Dispergierhilfsmittel u.a., zugegeben und einemulgiert bzw. -dispergiert.

Die Erfindung wird nun anhand von Beispielen und anhand deren Anwendungen und Vergleichen praktisch erläutert:
Es wurden zwei erfindungsgemässe Zusammensetzungen bereitgestellt (Zusammensetzungen K und N):

| | | M.-% |
|---|---|---|
| Zusammensetzung K: | 40 %-ige Lösung des Na-Salzes des Formaldehyd-Naphthalinsulfonsäurekondensates | 0,50 |
| | Amorphes, feinverteiltes, nichtkompaktiertes Siliziumdioxid ≧ 96,0 M.-% SiO₂ | 25,00 |
| | Hydrophiles Aluminiumoxid (spez. Oberfläche ca. 100 m²/g, Glühverlust < 3 M.-%) | 1,60 |
| | Handelsübliche Acryl-Dispersion A mit 50 ± 2 Gew.-% Feststoffgehalt | 25,00 |
| | Nichtionogenes Netzmittel (äthoxyliertes pflanzliches Oel) | 0,40 |
| | Dispergierhilfsmittel (N-Methyl-Pyrrolidon) | 0,25 |
| | Entschäumer ("NOPCO 8034") | 0,04 |
| | Filmbildemittel ("DOWANOL DPM") | 0,50 |
| | Fungicid (ca. 40 %-ige, wässerige Formaldehydlösung) | 0,05 |
| | Rest Wasser | |

| | |
|---|---|
| Zusammensetzung N: | Anstelle der nicht-kompaktierten wurde leicht kompaktierte amorphe Kieselsäure, anstelle der Acryldispersion A eine andere handelsübliche, etwa den gleichen Feststoffgehalt aufweisende, Dispersion B verwendet; |
| | Anstelle des hydrophilen Aluminiumoxides wurde eine mit Al₂O₃ vermengte Kieselsäure mit ca. 84 M.-% SiO₂ und ca. 16 M.-% Al₂O₃ als Stabilisationszusatz eingesetzt (1,2 M.-%) und zwar vor der Zugabe des amorphen, feinverteillten Siliziumdioxides; |
| | die anderen Komponenten und die Anteile sind die gleichen. |

Die Zusammensetzung K wurde auf ihre wichtigen physikalisch-technischen sowie auf ihre Anwendungs-Eigenschaften hin untersucht:

### VISKOSITAET (und somit Lagerbeständigkeit)

Diese ist in der folgenden Tabelle 1 dargestellt.

Vor der Bestimmung wurde der die Zusammensetzung enthaltende Behälter einmal gekippt; es wurden jeweils drei Messungen gemacht:

**Tabelle 1**

| Tage | Viskosität (in mPa · s) |
|---|---|
| 0 | 298 |
| 14 | 310 |
| 21 | 306 |
| 28 | 308 |
| 35 | 320 |
| 42 | 321 |
| 49 | 330 |
| 56 | 338 |
| 63 | 342 |
| 70 | 348 |
| 77 | 351 |
| 119 | 350 |
| 125 | 348 |

Die Probe zeigte also, gemäss den Werten in Tabelle 1, eine beachtliche Stabilität hinsichtlich der Viskositätsveränderung; dies bedeutet praktisch eine gesicherte Lagerstabilität. Pilzbefall wurde, obwohl die Muster nur leicht bedeckt aufbewahrt wurden, keiner festgestellt.

### FESTIGKEITEN

Aus den folgenden Komponenten wurde ein homogener Mörtel erhalten:
3000 Gewichtsteile Sand (0 bis 4 mm),
750 Gewichtsteile Portlandzement und entweder
225 Gewichtsteile Wasser und 225 Gewichtsteile Zusammensetzung K
oder
320 Gewichtsteile Wasser und 80 Gewichtsteile Zusammensetzung K.

Die folgende Tabelle 2 zeigt die Zunahme der Biegezug (BZ)- und der Druck (D)-Festigkeit von mit dem genannten Mörtel hergestellten Probekörpern; als Wert 100 der Festigkeiten dient dabei immer das Resultat des Nullmörtels nach 28 Tagen:

**Tabelle 2**

| Tage | 1 | 7 | 28 |
|---|---|---|---|
| Festigkeiten | | | |
| BZ | | | |
| Nullmörtel | 56 | 81 | 100 |
| Mischung 1 : 4 | 60 | 97 | 131 |
| Mischung 1 : 1 | 62 | 120 | 140 |

| D | | | |
|---|---|---|---|
| Nullmörtel | 39 | 76 | 100 |
| Mischung 1 : 4 | 41 | 95 | 126 |
| Mischung 1 : 1 | 44 | 118 | 143 |

### DRUCKFESTIGKEITEN, E-MODUL

Weitere Untersuchungen betreffend die Druckfestigkeits- und E-Modul-Werte von mit dem Zusatz K hergestellten Betonproben ergaben die Werte der folgenden Tabelle 3:

**Tabelle 3**

| Wasser: Zu-sammens.K | Konsistenz | Druckfestigkeiten N/mm² | | | E-Modul N/mm² |
|---|---|---|---|---|---|
| | | 1 Tag | 7 Tage | 28 Tage | |
| 1 : 1 | plastisch, erdfeucht | 21.8 | 45.8 | 60.3 | 37500 |
| 1 : 4 | spur nass | 18.4 | 41.9 | 54.4 | 29597 |
| 1 : 1 | " | 19.9 | 42.5 | 62.3 | 31441 |
| 1 : 4 | feuchter als 1 : 1 | 17.9 | 40.8 | 53.7 | 28632 |
| 1 : 1 | weich, plastisch | 21.9 | 44.8 | 61.2 | 30349 |
| 1 : 4 | spur trockener | 17.9 | 37.8 | 48.9 | 24335 |
| 1 : 1 | etwas feucht | 18.9 | 43.2 | 63.1 | 28708 |
| 1 : 4 | " | 16.5 | 31.8 | 48.1 | 29029 |
| 1 : 1 | feucht, plastisch | 20.6 | 48.5 | 59.0 | 33835 |
| 1 : 4 | feuchter als 1 : 1 | 13.9 | 40.1 | 58.7 | 31134 |
| 1 : 1 | plastisch | 18.3 | 44.0 | 56.4 | 31743 |
| 1 : 4 | feuchter, weniger plastisch | 15.7 | 41.6 | 54.5 | 30383 |
| 1 : 1 | erdfeucht, plastisch, gut verarbeitbar | 13.0 | 34.5 | 49.1 | 26708 |
| 1 : 1 | etwas feuchter | 11.4 | 33.7 | 49.1 | 27860 |
| nur Wasser | --- | 8.8 | 21.8 | 31.9 | 25352 |

### HAFTVERMITTLUNG /-FESTIGKEIT

Die Verwendung der Zusammensetzung K als Haftvermittler und Mörtel-Zusatz hat zu den Ergebnissen gemäss den folgenden Tabellen 4 und 5 geführt.

Zur Herstellung der Haftschlämme wird Zusammensetzung K im Verhältnis 1 : 2 mit Wasser verdünnt. 1 Teil dieser Anmachflüssigkeit wird mit 3 Teilen Sand und 1 Teil Zement vermischt. Die so vorbereitete Haftschlämme wird mit einer harten Bürste in den mattfeuchten Untergrund eingearbeitet. Der nachfolgende Mörtel wird frisch in frisch in die Haftschlämme eingearbeitet.

Der Untergrund muss frei von Schmutz, Zementschlämpen und Staub sein. Schalungsglatte Oberflächen sind durch Ueberschleifen oder Sand-, Wasserstrahlen usw. aufzurauhen. Der Untergrund muss den allgemeinen Gepflogenheiten entsprechend vorgenässt werden.

Daneben wird dem aufzutragenden Mörtel die Zusammensetzung K in den Gewichtsverhältnissen gemäss der folgenden Tabelle 4 zugegeben:

**Tabelle 4**

| Anwendung | Gewichtsverhältnis Zusammensetzung K : Wasser |
|---|---|
| Flickmörtel für Kanten, Treppenstufen usw. | |
| | 1 : 1 - 1 : 2 |
| Ausgleichsmörtel bis 10 mm | 1 : 1 |
| Ausgleichsmörtel über 10 mm | 1 : 2 - 1 : 4 |

| Ueberzüge und Unterlagsböden | |
|---|---|
| normale Beanspruchung | 1 : 4 |
| starke Beanspruchung | 1 : 1 - 1 : 2 |
| Vorlagsmörtel bei Arbeitsfugen | 1 : 4 |

Die Mörtel haben dabei die Zusammensetzung gemäss der Tabelle 1 (oben).

In der folgenden Tabelle 5 sind die Werte der mit derartigen Haftvermittler und Zusatz erreichten Haftzugfestigkeiten (HZ) (im Vergleich mit Nullmörteln) angegeben:

**Tabelle 5**

| HZ | Tage 7 | 28 |
|---|---|---|
| Nullmörtel | 86 | 100 |
| Mischung 1 : 4 | 136 | 151 |

## Patentansprüche

1. Haftvermittler und Mörtel-Zusatz stabilisierter Viskosität und erhöhter Lagerfähigkeit, welcher ≧ 92,0 M.-% der Gesamtzusammensetzung an Wasser, an amorphem, feinverteiltem Siliziumdioxid und an mindestens einer synthetischen Polymerdispersion - mit Siliziumdioxid und Polymerdispersion zusammen bis auf ± 6,0 M.-% gleich der vorgelegten Wassermasse -, sowie ≦ 4,0 M.-% der Gesamtzusammensetzung an nichtionischem Netzmittel, an Stabilisatoren und an Dispergierhilfsmittel enthält, dadurch gekennzeichnet, dass
- als amorphes, feinverteiltes Siliziumdioxid solches mit ≧ 92,0 M.-% SiO₂, dass
- als Stabilisationszusatz entweder ein schon mit kaltem Wasser quellbarer und auf Magnesiumsilikat beruhender Bentonit, eine mit Aluminiumoxid im Verhältnis von 4 : 1 bis 8 : 1 vermengte, feinstverteilte hydrophile Kieselsäure hoher spezifischer Oberfläche oder ein hydrophiles Aluminiumoxid hoher spezifischer Oberfläche mit ≧ 96,0 M.-% Al₂O₃-Gehalt in Anteilen von 0,2 bis 4,0 M.-% - bezogen auf die Gesamtzusammensetzung - dass
- als Dispergierzusatz ein solcher auf der Basis von in Wasser gelösten Formaldehyd-Naphthalinsulfonsäurekondensaten in Anteilen von 0,05 bis 2,0 M.-% (Feststoff) - bezogen auf die Gesamtzusammensetzung - und dass
- als nichtionisches Netzmittel ein solches mit hydrophilem wie hydrophobem Charakter, speziell ein äthoxyliertes,pflanzliches Oel, in Anteilen von 0,4 bis 2,0 M.-% - bezogen auf die Gesamtzusammensetzung -
im Haftvermittler und Mörtel-Zusatz vorliegen.

2. Haftvermittler und Mörtel-Zusatz gemäss Patentanspruch 1, weiter dadurch gekennzeichnet, dass
- das amorphe, feinverteilte Siliziumdioxid ein solches mit ≧ 95,0 M.-% SiO₂ und ≦ 1,2 M.-% C (Kohlenstoff) ist.

3. Haftvermittler und Mörtel-Zusatz gemäss Patentanspruch 1 oder 2, weiter dadurch gekennzeichnet, dass
- die mit Aluminiumoxid vermengte hydrophile Kieselsäure hoher spezifischer Oberfläche eine solche mit 80,0 bis 90,0 M.-% SiO₂ und 10,0 bis 20,0 14.-% Al₂O₃ und mit einer durchschnittlichen spezifischen Oberfläche nach BET von > 100 m²/g und
- das hydrophile Aluminiumoxid hoher spezifischer Oberfläche ein solches mit > 98,0 M.-% Al₂O₃ und mit > 80,0 m²/g nach BET sind.

4. Haftvermittler und Mörtel-Zusatz gemäss einem der Patentansprüche 1, 2 oder 3, weiter dadurch gekennzeichnet, dass die Formaldehyd-Naphthalinsulfonsäurekondensate bis über 100°C temperaturbeständig, in mit Kalk gesättigtem Wasser gut löslich und praktisch chloridfrei sind.

5. Verfahren zur Herstellung eines Haftvermittlers und Mörtel-Zusatzes gemäss Patentanspruch 1, gekennzeichnet durch den Ablauf der folgenden Verfahrensschritte:
- Eintragen und -dispergieren des amorphen, feinverteilten Siliziumdioxides in die Formaldehyd-Naphthalinsulfonsäurekondensat-Wasser-Mischung vor oder nach Zugabe des Stabilisationszusatzes, dann
- Einmischen der synthetischen Polymerdispersion und abschliessend der Zusätze,
unter Einstellung auf eine beständige End-Viskosität von 200 bis 900 mPa·s, wodurch auch die Lagerstabilität verbessert wird.

6. Verwendung des Haftvermittlers und Mörtel-Zusatzes gemäss Patentanspruch 1 zur Herstellung von Haftbrücken und von Beton mit verbesserten Haft- und Festigkeitseigenschaften.

## Claims

1. Adhesive agent and mortar additive having stabilised viscosity and extended storage capacity, which contains ≧ 92.0 M.-% of the total composition of water, of amorphous, finely divided silicon dioxide and of at least one synthetic polymer dispersion - with the silicon dioxide and polymer dispersion together save ±6.0 M.-% equal to the given mass of water -, and ≦ 4.0 M.-% of the total composition of non-ionic wetting agent, of stabilisers and dispersing agents, characterised in that
- present in the adhesive agent and mortar additive - as the amorphous, finely divided silicon dioxide is such a substance with ≧ 92.0 M.-% SiO₂, that
- as a stabilising additive is either a bentonite which is capable of swelling with cold water and based on magnesium silicate, a very finely divided hydrophilic silicic acid having a high specific surface, mixed with aluminium oxide in the ratio of 4:1 to 8:1 or a hydrophilic aluminium oxide having a high specific surface with ≧ 96.0 M.-% Al₂O₃ -content in proportions of 0.2 to 4.0 M.-% - with respect to the total composition - that
- as the dispersing additive is one such substance based on formaldehyde-naphthalin sulphonic acid condensates dissolved in water, in proportions of 0.05 to 2.0 M.-% (solid) - with respect to the total composition - and that
- as the non-ionic wetting agent is one such substance with a hydrophilic and hydrophobic nature, specifically an ethoxylised, vegetable oil, in proportions of 0.4 to 2.0 M.-% - with respect to the total composition.

2. Adhesive agent and mortar additive according to Patent Claim 1, further characterised by the fact that
- the amorphous, finely divided silicon dioxide is such a substance with ≧ 95.0 M.-% SiO₂ and ≦ 1.2 M.-% C (carbon).

3. Adhesive agent and mortar additive according to Patent Claim 1 or 2, further characterised by the fact that
- the hydrophilic silicic acid of high specific surface mixed with aluminium oxide is such a substance with 80.0 to 90.0 M.-% SiO₂ and 10.0 to 20.0 M.-% Al₂O₃ and with an average specific surface according to BET of > 100m²/g and
- the hydrophilic aluminium oxide having a high specific surface is such a substance with > 98.0 M.-% Al₂O₃ and with > 80.0 m²/g according to BET.

4. Adhesive agent and mortar additive according to one of Patent Claims 1, 2 or 3, further characterised by the fact that the formaldehyde naphthalin sulphonic acid condensates are temperature-resistant to above 100°C, are easily soluble in water saturated with lime and are virtually chloride-free.

5. Method for the manufacture of an adhesive agent and mortar additive according to Patent Claim 1, characterised by the completion of the following steps of the method:
- introducing and dispersing the amorphous, finely divided silicon dioxide in the formaldehyde-naphthalin sulphonic acid condensate/water mixture before or after the addition of the stabilising additive, then
- mixing-in of the synthetic polymer dispersion and finally of the additives,
with adjustment to a permanent final viscosity of 200 to 900 mPa.s, due to which the stability during storage is also improved.

6. Use of the adhesive agent and mortar additive according to Patent Claim 1 for the manufacture of adhesive bridges and of concrete with improved properties of adhesion and strength.

## Revendications

1. Promoteur d'adhésion et additif de mortier de viscosité stabilisée et de stabilité au stockage augmentée, qui contient ≧ 92,0 % en masse de la composition totale d'eau, de dioxyde de silicium amorphe finement divisé et d'au moins une dispersion de polymère synthétique, le dioxyde de silicium et la dispersion de polymère représentant ensemble jusqu'à ± 6,0 % en masse de la masse d'eau disposée au préalable, ainsi que ≦ 4,0 % en masse de la composition totale d'agent mouillant non ionique, de stabilisants et d'adjuvants dispersants, caractérisé en ce que le promoteur d'adhésion et additif de mortier contient
- comme dioxyde de silicium amorphe finement divisé un dioxyde de silicium contenant ≧ 92,0 % en masse de SiO₂,
- comme additif stabilisant une bentonite gonflable même à l'eau froide et à base de silicate de magnésium un acide silicique hydrophile très finement divisé de surface spécifique élevée, additionné d'oxyde d'aluminium dans le rapport de 4:1 à 8:1 ou un oxyde d'aluminium hydrophile de surface spécifique élevée avec une teneur en Al₂O₃ ≧ 96,0 % en masse, dans des proportions de 0,2 à 4,0 % en masse par rapport à la composition totale,
- comme additif dispersant un additif dispersant à base de condensats formaldéhyde-acide naphtalènesulfonique dissous dans l'eau, dans des proportions de 0,05 à 2,0 % en masse (matière solide) par rapport à la composition totale, et
- comme agent mouillant non ionique un agent mouillant à caractère hydrophile et hydrophobe, en particulier une huile végétale éthoxylée, dans des proportions de 0,4 à 2,0% en masse par rapport à la composition totale.

2. Promoteur d'adhésion et additif de mortier selon la revendication 1, caractérisé en outre en ce que
- le dioxyde de silicium amorphe finement divisé est un dioxyde de silicium contenant ≧ 95,0 % en masse de SiO₂ et ≦ 1,2% en masse de C (carbone).

3. Promoteur d'adhésion et additif de mortier selon la revendication 1 ou 2, caractérisé en outre en ce que
- l'acide silicique hydrophile de surface spécifique élevée, additionné d'oxyde d'aluminium, est un acide silicique contenant 80,0 à 90,0 % en masse de SiO₂ et 10,0 à 20,0 % en masse de Al₂O₃ et présentant une surface spécifique moyenne selon BET > 100 m²/g et
- l'oxyde d'aluminium hydrophile de surface spécifique élevée est un oxyde d'aluminium contenant > 98,0 % en masse de Al₂O₃ et présentant > 80,0 m²/g selon BET.

4. Promoteur d'adhésion et additif de mortier selon l'une des revendications 1, 2 ou 3, caractérisé en outre en ce que les condensats formaldéhyde-acide naphtalènesulfonique résistent à la chaleur jusqu'à plus de 100°C, sont très solubles dans l'eau saturée de chaux et sont pratiquement exempts de chlorures.

5. Procédé de préparation d'un promoteur d'adhésion et additif de mortier selon la revendication 1, caractérisé par le déroulement des opérations de base suivantes :
- introduction et dispersion du dioxyde de silicium amorphe finement divisé dans le mélange de condensats formaldéhyde-acide naphtalènesulfonique et d'eau avant ou après l'addition de l'additif stabilisant, puis
- incorporation de la dispersion de polymère synthétique et enfin des additifs,
avec réglage à une viscosité finale stable de 200 à 900 mPa.s de sorte que la stabilité au stockage est améliorée elle aussi.

6. Utilisation du promoteur d'adhésion et additif de mortier selon la revendication 1, pour la fabrication de ponts d'adhérence et de béton présentant des propriétés d'adhérence et de résistance mécanique améliorées.
